# EUROPÄISCHE PATENTANMELDUNG

(11) **EP 3 351 420 A1**
(43) Veröffentlichungstag der Anmeldung: **25.07.2018**
(21) Anmeldenummer: 17197205.2
(22) Anmeldetag: 19.10.2017
(51) Int. Cl.: B60L 7/10, B60W 30/18, B60K 6/00, B60L 11/18, B60K 6/52

(54) **VERFAHREN ZUM BETREIBEN EINES FAHRZEUGS**

(30) Priorität: 23.01.2017 DE 102017200978
(71) Anmelder: AUDI AG, 85045 Ingolstadt (DE)
(72) Erfinder: Borgmann, Jochen, 85139 Wettstetten (DE)

(57) **Zusammenfassung**

Die Erfindung betrifft ein Verfahren zum Betreiben eines Fahrzeugs (2), das mehrere Räder (8, 10,12, 14) und mehrere Elektromaschinen (16, 18, 20, 22) aufweist, wobei jede Elektromaschine (16, 18, 20, 22) mit mindestens einem Rad (8, 10, 12, 14) gekoppelt und in mehreren Betriebsmodi betreibbar ist, wobei die jeweilige Elektromaschine (16, 18, 20, 22) in einem ersten motorischen Betriebsmodus in einer ersten Drehrichtung gedreht wird, wobei elektrische Energie in mechanische Energie gewandelt wird, wobei das mindestens eine Rad (8, 10, 12, 14) in einer Vorwärtsrichtung gedreht wird, wodurch das Fahrzeug mit dem mindestens einen Rad (8, 10, 12, 14) angetrieben wird, wobei die jeweilige Elektromaschine (16, 18, 20, 22) in einem zweiten motorischen Betriebsmodus in einer zweiten Drehrichtung gedreht wird, die der ersten Drehrichtung entgegengesetzt ist, wobei elektrische Energie in mechanische Energie gewandelt wird, wobei das mindestens eine Rad (8, 10, 12, 14) in einer Rückwärtsrichtung gedreht wird, wodurch das Fahrzeug mit dem mindestens einen Rad (8, 10, 12, 14) gebremst wird, wobei für die jeweilige Elektromaschine (16, 18, 20, 22) ein dritter generatorischer Betriebsmodus vorgesehen ist, wobei das mindestens eine Rad (8, 10, 12, 14) in der Vorwärtsrichtung gedreht wird, wobei mechanische Energie, die aus einer Bewegung des mindestens einen Rads (8, 10, 12, 14) resultiert, von der jeweiligen Elektromaschine (16, 18, 20, 22) im dritten generatorischen Betriebsmodus in elektrische Energie gewandelt wird, wodurch das Fahrzeug (2) gebremst wird.

## Beschreibung

Die Erfindung betrifft ein Verfahren zum Betreiben eines Fahrzeugs und ein System zum Betreiben eines Fahrzeugs.

Ein sogenanntes Elektrofahrzeug weist mindestens eine Elektromaschine zu dessen Antrieb sowie mindestens einen elektrischen Energiespeicher, üblicherweise eine Batterie, der eine hohe Betriebsspannung aufweist, auf. Falls die mindestens eine Elektromaschine als Motor betrieben wird, wird elektrische Energie aus dem mindestens einen elektrischen Energiespeicher in mechanische Energie zum Antreiben des Fahrzeugs umgewandelt. Es ist jedoch auch möglich, die mindestens eine Elektromaschine als Generator zu betreiben, wobei mechanische Energie, die aus einer Bewegung des Fahrzeugs resultiert, in elektrische Energie umgewandelt und in dem mindestens einen elektrischen Energiespeicher gespeichert wird. Ein Betriebsfall, in dem die Elektromaschine als Generator betrieben wird, kann auch als Rekuperation bezeichnet werden, wobei eine Bewegung des Fahrzeugs in diesem Fall verzögert wird. Falls das Fahrzeug bergab fährt, kann somit auch die mechanische Energie in elektrische Energie umgewandelt werden, wodurch Bremsen des Fahrzeugs geschont werden können.

Allerdings ist eine derartige Rekuperation bloß dann möglich, wenn in dem mindestens einen elektrischen Energiespeicher noch genügend freie Kapazitäten zum Speichern elektrischer Energie vorhanden sind und demnach der mindestens eine elektrische Energiespeicher vor Beginn der Fahrt bergab nicht vollständig geladen ist. Falls der mindestens eine elektrische Energiespeicher vor der Fahrt bergab zu wenig Kapazitäten zum Speichern zusätzlicher elektrischer Energie aufweisen sollte, müssen zum Bremsen des Fahrzeugs dessen konventionelle Bremsen verwendet werden, die dann eine komplette erforderliche Verzögerungsleistung erbringen müssen. Daraus kann jedoch resultieren, dass die Bremsen überlastet werden und/oder dass das Fahrzeug größere und schwerere und demnach teurere Bremsen benötigt. Falls das Fahrzeug zusätzlich mit einem Anhänger bergab fahren muss, ist von den konventionellen Bremsen noch eine zusätzliche Verzögerungsleistung bereitzustellen.

Die Druckschrift DE 10 2012 107 963 A1 beschreibt eine Hilfsantriebsvorrichtung für ein Fahrzeug, die in ein Antriebssystem menschlich eingeleitete Kraft elektromotorisch ergänzt. Dabei kann für das Fahrzeug in einem Schubbetrieb eine Rekuperation durchgeführt werden, wobei bspw. durch Steuern der Rekuperation eine vorgewählte Höchstgeschwindigkeit eingehalten werden kann. Dies kann die Maßnahme umfassen, einen Elektromotor zur Abgabe eines Drehmoments entgegen seiner Drehrichtung anzusteuern, wenn eine Anpassung einer aktuellen Fahrgeschwindigkeit an die vorgewählte Höchstgeschwindigkeit mittels Rekuperation allein nicht möglich ist.

Eine Steuervorrichtung für ein Bremssystem, das mit einer elektrischen Antriebs- und/oder Generatorvorrichtung ausgestattet ist, ist in der Druckschrift DE 10 2010 042 995 A1 beschrieben. Dabei sind die Steuervorrichtung und das Bremssystem in einem Kraftfahrzeug angeordnet. Außerdem ist es möglich, Antriebs- und/oder Generatorvorrichtungen zum Bremsen des Kraftfahrzeugs entgegen einer üblichen Bewegungsrichtung des Kraftfahrzeugs zu bewegen, so dass ein der Bewegungsrichtung des Kraftfahrzeugs entgegen gerichtetes Antriebsmoment auf mindestens ein Rad des Kraftfahrzeugs ausübbar ist.

Vor diesem Hintergrund war es eine Aufgabe, ein Fahrzeug bei einer Fahrt effizient elektromechanisch zu bremsen.

Diese Aufgabe wird mit einem Verfahren und einem System mit den Merkmalen der unabhängigen Patentansprüche gelöst. Ausführungsformen des Verfahrens und des Systems gehen aus den abhängigen Patentansprüchen und der Beschreibung hervor.

Das erfindungsgemäße Verfahren ist zum Betreiben eines Fahrzeugs, das mehrere Räder und mehrere Elektromaschinen aufweist, ausgebildet, wobei jede Elektromaschine mit mindestens einem Rad gekoppelt und in mehreren Betriebsmodi betreibbar ist. Dabei wird die jeweilige Elektromaschine in einem ersten motorischen Betriebsmodus in einer ersten Drehrichtung gedreht, wobei elektrische Energie in mechanische Energie gewandelt wird, wobei das mindestens eine Rad in einer Vorwärtsrichtung bzw. Vorwärtsfahrtrichtung gedreht wird, wodurch das Fahrzeug mit dem mindestens einen Rad angetrieben wird. In einem zweiten motorischen Betriebsmodus wird die jeweilige Elektromaschine in einer zweiten Drehrichtung gedreht, die der ersten Drehrichtung entgegengesetzt ist, wobei elektrische Energie in mechanische Energie gewandelt wird, wobei das mindestens eine Rad in einer Rückwärtsrichtung bzw. Rückwärtsfahrtrichtung gedreht wird, wodurch das Fahrzeug mit dem mindestens einen Rad gebremst wird. Außerdem ist für die jeweilige Elektromaschine ein dritter generatorischer und/oder rekuperativer Betriebsmodus vorgesehen, wobei das mindestens eine Rad in der Vorwärtsrichtung gedreht wird, wobei mechanische Energie, die aus einer Bewegung des mindestens einen Rads resultiert, von der jeweiligen Elektromaschine im dritten generatorischen Betriebsmodus in elektrische Energie gewandelt wird, wodurch das Fahrzeug gebremst wird. Bei dem Verfahren wird mindestens eine erste Elektromaschine in dem zweiten motorischen Betriebsmodus und mindestens eine zweite Elektromaschine in dem dritten generatorischen Betriebsmodus betrieben, wobei elektrische Energie, die von der mindestens eine zweiten Elektromaschine aus mechanischer Energie gewandelt wird, direkt, unmittelbar, zugleich und/oder synchron von der mindestens einen ersten Elektromaschine in mechanische Energie gewandelt wird.

Somit ist es im Rahmen des Verfahrens möglich, elektrische Energie, die von der mindestens einen zweiten Elektromaschine beim Betrieb als Generator bereitgestellt wird, ohne Zwischenspeicherung in einem elektrischen Energiespeicher zu der mindestens einen ersten Elektromaschine, in der Regel über mindestens eine elektrische Leitung, durch die die Elektromaschinen miteinander verbunden sind, zu übermitteln, wobei die mindestens eine erste Elektromaschine die eben gewandelte bzw. erzeugte elektrische Energie wieder in mechanische Energie umwandelt.

Unabhängig davon kann vorgesehen sein, dass das Fahrzeug mindestens einen elektrischen Energiespeicher aufweist, in dem elektrische Energie speicherbar ist, die von mindestens einer Elektromaschine im dritten generatorischen Betriebsmodus aus mechanischer Energie gewandelt wird, und aus dem elektrische Energie entnehmbar ist, die von der mindestens einen Elektromaschine in einem der beiden möglichen motorischen Betriebsmodi in mechanische Energie gewandelt wird.

In Ausgestaltung des Verfahrens wird die mindestens eine erste Elektromaschine in dem zweiten motorischen Betriebsmodus und die mindestens eine zweite Elektromaschine in dem dritten generatorischen Betriebsmodus betrieben, falls in dem mindestens einen Energiespeicher eine Menge an elektrischer Energie gespeichert ist, die größer als ein definierbarer Schwellwert bzw. Schwellenwert ist. Somit ist es möglich, das Fahrzeug mit mindestens zwei Elektromaschinen zu bremsen, wobei die mindestens eine erste Elektromaschine im zweiten bremsend wirkenden Betriebsmodus als Motor und die mindestens eine zweite Elektromaschine im dritten bremsend wirkenden Betriebsmodus als Generator betrieben wird, wobei die Elektromaschinen die erzeugte elektrische Energie untereinander austauschen und direkt wieder in mechanische Energie umwandeln.

Üblicherweise wird die mindestens eine erste Elektromaschine in dem zweiten motorischen Betriebsmodus und die mindestens eine zweite Elektromaschine in dem dritten generatorischen Betriebsmodus betrieben, wenn das Fahrzeug zu bremsen ist.

Alternativ oder ergänzend wird die mindestens eine erste Elektromaschine in dem zweiten motorischen Betriebsmodus und die mindestens eine zweite Elektromaschine in dem dritten generatorischen Betriebsmodus betrieben, wenn das Fahrzeug bergab fährt.

Außerdem ist es alternativ oder ergänzend möglich, dass die mindestens eine erste Elektromaschine in dem zweiten motorischen Betriebsmodus und die mindestens eine zweite Elektromaschine in dem dritten generatorischen Betriebsmodus betrieben wird, wobei ein Drehmoment des Fahrzeugs unter den Rädern ausgeglichen und/oder verteilt wird.

Hierbei ist die mindestens eine erste Elektromaschine, die im zweiten Betriebsmodus als Motor betrieben wird, mit mindestens einem ersten Rad gekoppelt. Außerdem ist die mindestens eine zweite Elektromaschine, die im dritten Betriebsmodus als Generator betrieben wird, mit mindestens einem zweiten Rad gekoppelt. Somit ist es möglich, Drehmoment von dem mindestens einen zweiten Rad über die mindestens eine zweite Elektromaschine und die mindestens eine erste Elektromaschine, die elektrische Energie direkt untereinander austauschen, zu dem mindestens einen ersten Rad zu übertragen. In der Regel weist das Fahrzeug hinsichtlich seiner Vorwärtsfahrtrichtung eine linke und eine rechte Seite auf, an der jeweils mindestens ein Rad angeordnet ist. Außerdem weist das Fahrzeug mehrere Achsen mit jeweils mindestens einem Rad auf. Im Rahmen des Verfahrens kann elektrische Energie zwischen den Seiten und/oder den Achsen des Fahrzeugs und somit zwischen Rädern bzw. Elektromaschinen an unterschiedlichen Positionen, d. h. Achsen und/oder Seiten des Fahrzeugs, parallel (zwischen Achsen) oder senkrecht (zwischen Seiten) zur Vorwärtsfahrtrichtung aber auch diagonal ausgetauscht werden.

Falls die mindestens eine erste Elektromaschine in dem zweiten motorischen Betriebsmodus und die mindestens eine zweite Elektromaschine in dem dritten generatorischen Betriebsmodus betrieben wird, ist es auch möglich, dass wenigstens ein Teil der elektrischen Energie, die von der mindestens einen ersten Elektromaschine im zweiten motorischen Betriebsmodus benötigt wird, aus dem mindestens einen elektrischen Energiespeicher entnommen wird.

In dem Fall, dass die mindestens eine erste Elektromaschine in dem zweiten motorischen Betriebsmodus und die mindestens eine zweite Elektromaschine in dem dritten generatorischen Betriebsmodus betrieben wird, ist es alternativ oder ergänzend möglich, dass wenigstens ein Teil der elektrischen Energie, die von der mindestens einen zweiten Elektromaschine im dritten motorischen Betriebsmodus erzeugt wird, in dem mindestens einen elektrischen Energiespeicher gespeichert wird.

Somit ergibt sich u. a. die Möglichkeit, einen Teil der elektrischen Energie, die die mindestens eine erste Elektromaschine im zweiten Betriebsmodus benötigt, aus dem mindestens einen elektrischen Energiespeicher bereitzustellen und/oder einen Teil der elektrischen Energie, die von der mindestens einen zweiten Elektromaschine im dritten Betriebsmodus aus mechanischer Energie gewandelt wird, in dem mindestens einen elektrischen Energiespeicher zu speichern. Somit kann unter zusätzlicher Nutzung des mindestens einen elektrischen Energiespeichers das Drehmoment zwischen Rädern, denen die Elektromaschinen zugeordnet sind, bedarfs- und/oder situationsgerecht ausgetauscht werden.

Das erfindungsgemäße System ist zum Betreiben eines Fahrzeugs ausgebildet, das mehrere Räder und mehrere Elektromaschinen aufweist, wobei jede Elektromaschine mit mindestens einem Rad gekoppelt und in mehreren Betriebsmodi betreibbar ist. Dabei ist die jeweilige Elektromaschine in einem ersten motorischen Betriebsmodus in einer ersten Drehrichtung drehbar, wobei elektrische Energie in mechanische Energie wandelbar ist, wobei das mindestens eine Rad in einer Vorwärtsrichtung bzw. Vorwärtsfahrtrichtung drehbar ist, wodurch das Fahrzeug mit dem mindestens einen Rad antreibbar ist. Die jeweilige Elektromaschine ist zudem in einem zweiten motorischen Betriebsmodus in einer zweiten Drehrichtung drehbar, die der ersten Drehrichtung entgegengesetzt ist, wobei elektrische Energie in mechanische Energie wandelbar ist, wobei das mindestens eine Rad in einer Rückwärtsrichtung bzw. Rückwärtsfahrtrichtung drehbar ist, wodurch das Fahrzeug mit dem mindestens einen Rad bremsbar ist. Für die jeweilige Elektromaschine ist auch ein dritter generatorischer und/oder rekuperativer Betriebsmodus vorgesehen, wobei das mindestens eine Rad in der Vorwärtsrichtung drehbar ist, wobei mechanische Energie, die aus einer Bewegung des mindestens einen Rads resultiert, von der jeweiligen Elektromaschine im dritten generatorischen Betriebsmodus in elektrische Energie wandelbar ist, wodurch das Fahrzeug bremsbar ist. Das System umfasst mindestens ein Steuergerät, das dazu ausgebildet ist, zu veranlassen, mindestens eine erste Elektromaschine in dem zweiten motorischen Betriebsmodus und mindestens eine zweite Elektromaschine in dem dritten generatorischen Betriebsmodus zu betreiben, wobei elektrische Energie, die von der mindestens eine zweiten Elektromaschine aus mechanischer Energie wandelbar ist, direkt, unmittelbar, zugleich und/oder synchron von der mindestens einen ersten Elektromaschine in mechanische Energie wandelbar ist.

Bei einer möglichen Umsetzung des Verfahrens kann das Fahrzeug nunmehr auch bei einer Fahrt bergab gebremst werden, auch wenn dessen mindestens einer elektrische Energiespeicher vollständig geladen sein sollte.

Hierbei wird u. a. die Möglichkeit genutzt, dass die mindestens eine Elektromaschine bzw. mindestens ein Elektroantrieb aktiv in zwei Drehrichtungen und somit Richtungen gedreht werden kann, was bspw. bei einem konventionellen Verbrennungsmotor nicht möglich ist, der lediglich in einer Drehrichtung gedreht werden kann.

Falls der mindestens eine elektrische Energiespeicher, bspw. ein Hochvoltspeicher, vollständig geladen ist, und dennoch Energiereserven zum Bremsen des Fahrzeugs vorgehalten werden sollen, wird die mindestens eine erste Elektromaschine im zweiten Betriebsmodus entgegen einer Vorwärtsfahrtrichtung des Fahrzeugs bestromt, wobei für die mindestens eine Elektromaschine ein Magnetfeld eingestellt wird, das ansonsten für eine Rückwärtsfahrtrichtung verwendet wird, und dem Magnetfeld für die Vorwärtsfahrtrichtung entgegengesetzt ist. Somit kann entgegen einer normalen Rekuperation, in der elektrische Energie gewonnen wird, diese elektrische Energie verbraucht werden. Somit kann aus dem mindestens einen elektrischen Energiespeicher, falls dieser bspw. vollständig geladen sein sollte, ebenfalls elektrische Energie zum Bremsen des Fahrzeugs entnommen werden. Somit kann das Fahrzeug insgesamt auch unabhängig von einem Beladungszustand des mindestens einen elektrischen Energiespeichers mit der mindestens einen Elektromaschine gebremst werden, wodurch sich u. a. ergibt, dass sonstige Bremsen des Fahrzeugs leichter und kleiner dimensioniert sein können.

In der Regel umfasst das Fahrzeug zwei antreibbare Achsen, d. h. eine vordere Achse und eine hintere Achse, wobei jeder Achse mindestens eine Elektromaschine zugeordnet ist. Bei einer möglichen Ausgestaltung des Verfahrens werden Elektromaschinen, die beiden Achsen zugeordnet sind, entgegen der Vorwärtsrichtung angesteuert, wobei sämtliche Elektromaschinen Energie aus dem mindestens einen Elektrospeicher zum Bremsen verbrauchen können. Es ist jedoch auch möglich, lediglich eine erste Achse entgegen der Vorwärtsfahrtrichtung anzusteuern, wobei nur lediglich mindestens eine Elektromaschine, die dieser ersten Achse zugeordnet ist, elektrische Energie aus dem mindestens einen elektrischen Energiespeicher verbraucht, wohingegen die andere zweite Achse im Leerlauf betrieben wird und sich simultan zu der ersten Achse dreht.

In einer weiteren möglichen Ausgestaltung des Verfahrens ist es möglich, dass eine der Achsen durch die mindestens eine Elektromaschine entgegen der Vorwärtsfahrtrichtung angesteuert wird, wohingegen durch die mindestens eine Elektromaschine, die der anderen Achse zugeordnet ist, die Rekuperation durchgeführt wird. Dabei ist es möglich, dass mit mindestens einer Elektromaschine bei Durchführung der Rekuperation mechanische Energie der ihr zugeordneten Achse in elektrische Energie umgewandelt wird, die im selben Moment zu der mindestens einen Elektromaschine der entsprechend anderen Achse übertragen wird, die entgegen der Vorwärtsfahrtrichtung angesteuert wird, wobei die von der einen Elektromaschine aus mechanischer Energie gewandelte elektrische Energie von der mindestens einen anderen Elektromaschine gleich wieder in mechanische Energie umgewandelt wird, die kinetisch einer Bewegung des Fahrzeugs in Vorwärtsrichtung entgegenwirkt.

Es ist ebenfalls möglich, dass jeder Achse zwei oder mehr Elektromaschinen zugeordnet sind. Dies kann bedeuten, dass einem ersten, linken Rad der jeweiligen Achse eine erste Elektromaschine und einem zweiten rechten Rad der jeweiligen Achse eine zweite Elektromaschine zugeordnet ist. Dabei ergibt sich die Möglichkeit, Räder auf einer ersten Seite des Fahrzeugs, bspw. linke Räder, sowie Räder auf einer zweiten Seite des Fahrzeugs, bspw. rechte Räder, entgegen der Vorwärtsrichtung und/oder rekuperativ unterschiedlich stark anzusteuern. Hierdurch ergibt sich die Möglichkeit einer Verteilung und/oder eines Ausgleichs von Drehmoment und somit eines Torque Vectorings während eines aktiven elektrischen Bremsens des Fahrzeugs, was bspw. bei langen und kurvenreichen Fahrten bergab genutzt werden kann.

Das Verfahren und damit verbundene Szenarien werden in Ausgestaltung in Fällen umgesetzt, die auch als Notfälle bezeichnet werden können, da es je nach Ansteuerung der Elektromaschinen, Achsen und/oder Rädern eventuell zu Komforteinbußen oder Einschränkungen einer Fahrstabilität kommen kann, weshalb Funktionen, die im Rahmen des Verfahrens realisierbar sind, u. a. auch für Notfälle vorgehalten werden. Falls während einer Fahrt des Fahrzeugs erkannt wird, dass eine Aufnahme von elektrischer Energie in dem mindestens einen elektrischen Energiespeicher eingeschränkt ist und/oder eine Bremse zu heiß wird, wird das Fahrzeug durch den mindestens einen elektrischen Energiespeicher gebremst, wodurch Insassen des Fahrzeugs u. a. sicher bergab fahren können.

Das Verfahren kann auch für Fahrzeuge mit mehr als zwei Achsen durchgeführt werden, wobei mindestens zwei dieser Achsen oder in Ausgestaltung jeder Achse mindestens eine Elektromaschine zugeordnet ist. Dabei kann das Fahrzeug auch als Anhänger ausgebildet sein.

Beim Betreiben des Fahrzeugs ist es somit nicht mehr zwangsläufig erforderlich, in dem mindestens einen elektrischen Energiespeicher einen Puffer zur Aufnahme weiterer elektrischer Energie vorzuhalten und somit deren Ladungszustand (SOC, state of charge) zu steuern. Da das Fahrzeug mehrere Elektromaschinen aufweist, ist es möglich, in dem mindestens einen elektrischen Energiespeicher genügend elektrische Energie zu speichern bzw. zu bevorraten, wobei dieser mindestens eine elektrische Energiespeicher auch vollständig geladen sein kann und das Fahrzeug trotzdem mit mindestens einer Elektromaschine dennoch gebremst werden kann. Außerdem ist durch Nutzung mehrerer Elektromaschinen in unterschiedlichen Betriebsmodi eine Verteilung von Drehmoment des Fahrzeugs, üblicherweise zwischen Achsen und/oder Rädern des Fahrzeugs, hinsichtlich einer erhöhten Fahrdynamik und Fahrstabilität möglich.

Weiterhin ergibt sich bei einer Anwendung des Verfahrens, dass der Ladezustand des mindestens einen elektrischen Energiespeichers in Abhängigkeit einer geographischen Lage und/oder Höhe und demnach abhängig von einer jeweils aktuellen Höhe des Fahrzeugs kontrolliert und somit gesteuert und/oder geregelt werden muss. Somit kann das Fahrzeug unabhängig von dessen Höhenlage angetrieben sowie auch gebremst werden. Dies ist auch dann möglich, falls sämtliche elektrischen Energiespeicher des Fahrzeugs zu Beginn einer Fahrt bergab bereits vollständig mit elektrischer Energie geladen sein sollten, da das Fahrzeug gebremst werden kann, auch wenn es zusätzlich mit einem Anhänger belastet sein sollte.

Da mehrere Elektromaschinen verwendet werden, wobei jede Elektromaschine mindestens einem Rad und/oder mindestens einer Achse des Fahrzeugs zugeordnet ist, ist es möglich, elektrische Energie zwischen unterschiedlichen Elektromaschinen direkt zu transferieren, ohne diese hierbei in dem mindestens einen elektrischen Energiespeicher zwischenzeitlich speichern zu müssen. Dabei kann elektrische Energie, die von einer ersten Elektromaschine aus mechanischer Energie des Fahrzeugs gewandelt wird, von einer zweiten Elektromaschine in Ausgestaltung direkt wieder in mechanische Energie umgewandelt werden. Das vorgestellte Verfahren eignet sich auch dazu, Räder, die entweder vorne oder hinten und/oder entweder links oder rechts angeordnet sind, durch gleichzeitigen Betrieb von Elektromaschinen in unterschiedlichen Betriebsmodi, unterschiedlich stark anzutreiben oder zu bremsen, wodurch für die Räder unterschiedliches Drehmoment bereitgestellt und somit das Drehmoment entsprechend verteilt werden kann. Hierdurch sind u. a. eine Fahrstabilität sowie eine Fahrdynamik des Fahrzeugs aktiv zu unterstützen.

Falls eine Bremse des Fahrzeugs überlastet sein sollte, kann das Fahrzeug durch die mindestens eine Elektromaschine dennoch gebremst werden, wobei im Gegensatz zur Rekuperation auch elektrische Energie durch Umwandlung in mechanische Energie vernichtet werden kann. Somit können die Bremsen des Fahrzeugs kleiner dimensioniert werden, wodurch dessen Masse reduziert werden kann.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.

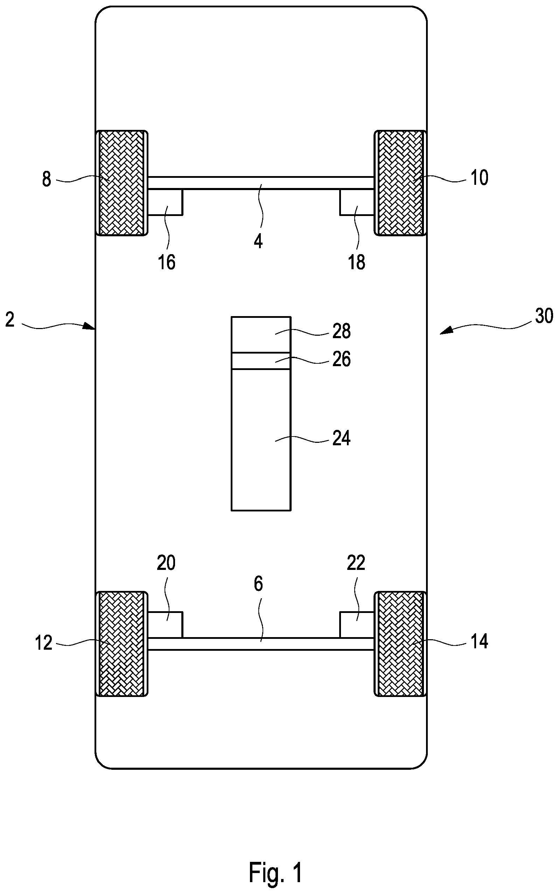

Figur 1 zeigt in schematischer Darstellung ein Kraftfahrzeug, das eine Ausführungsform des erfindungsgemäßen Systems zur Durchführung einer Ausführungsform des erfindungsgemäßen Verfahrens aufweist.

Figur 1 zeigt in schematischer Darstellung ein Kraftfahrzeug 2, das als Komponenten eine vordere Achse 4 und eine hintere Achse 6 aufweist. Dabei sind an der vorderen Achse 4 ein linkes vorderes Rad 8 und ein rechtes vorderes Rad 10 angeordnet. An der hinteren Achse 6 sind ein linkes hinteres Rad 12 sowie ein rechtes hinteres Rad 14 angeordnet. Außerdem ist jedem Rad 8, 10, 12, 14 eine Elektromaschine 16, 18, 20, 22 zugeordnet, wobei dem vorderen linken Rad 8 eine vordere linke Elektromaschine 16, dem vorderen rechten Rad 10 eine vordere rechte Elektromaschine 18, dem hinteren linken Rad 12 eine hintere linke Elektromaschine 20 und dem hinteren rechten Rad 14 eine hintere rechte Elektromaschine 22 zugeordnet sind. Neben den Rädern 8, 10, 12, 14 und den Elektromaschinen 16, 18, 20, 22 umfasst das Fahrzeug 2 mindestens einen elektrischen Energiespeicher 24, wobei lediglich ein derartiger elektrischer Energiespeicher 24 hier gezeigt ist, mindestens einen Sensor 26 und mindestens ein Steuergerät 28 als weitere Komponenten. Mit dem mindestens einen Sensor 26 kann u. a. überwacht werden, ob das Fahrzeug 2 bergab fährt.

Dabei kann mindestens eine der genannten Komponenten des Fahrzeugs 2 auch als Komponente der Ausführungsform des erfindungsgemäßen Systems 30 ausgebildet sein sowie zur Durchführung der Ausführungsform des erfindungsgemäßen Verfahrens genutzt werden. Das Steuergerät 28 ist dazu ausgebildet, eine Funktion, bspw. einen Betriebsmodus, mindestens einer der anderen Komponenten des Fahrzeugs 2, bspw. von den genannten Elektromaschinen 16, 18, 20, 22 und/oder des Systems 30, sowie mindestens einen Schritt der Ausführungsform des Verfahrens zu kontrollieren und somit zu steuern und/oder zu regeln.

Hierbei kann jede Elektromaschine 16, 18, 20, 22 in unterschiedlichen Betriebsmodi betrieben werden. Dabei kann eine jeweilige Elektromaschine 16, 18, 20, 22 als Motor betrieben werden, wobei der mindestens einen Elektromaschine 16, 18, 20, 22 von mindestens einer anderen Komponente des Fahrzeugs 2 elektrische Energie bereitgestellt wird, die von der jeweiligen Elektromaschine 16,18, 20, 22 in mechanische Energie umgewandelt wird, durch die das Rad 8, 10, 12, 14, das der jeweiligen Elektromaschine 16, 18, 20, 22 zugeordnet und/oder mit dieser gekoppelt ist, in Bewegung gesetzt wird. Hierbei ist es möglich, das jeweilige Rad 8,10, 12, 14 bei dem Betrieb der zugeordneten Elektromaschine 16, 18, 20, 22 als Motor entweder in einem ersten Betriebsmodus in einer ersten Richtung bzw. Vorwärtsrichtung oder in einem zweiten Betriebsmodus in einer zweiten Drehrichtung bzw. Rückwärtsrichtung mechanisch zu beaufschlagen.

Dabei ist es möglich, die hierfür erforderliche elektrische Energie der jeweiligen Elektromaschine 16,18, 20, 22 aus dem mindestens einen elektrischen Energiespeicher 24 oder, wie nachstehend genauer erläutert wird, von mindestens einer anderen Elektromaschine 16, 18, 20, 22 als Komponente des Fahrzeugs 2 und/oder des Systems 30 bereitzustellen.

In einem weiteren, dritten Betriebsmodus kann eine jeweilige Elektromaschine 16, 18, 20, 22 als Generator betrieben werden, wobei mechanische Energie, die aus einer Drehung jenes Rads 8, 10, 12, 14 resultiert, die der jeweiligen Elektromaschine 16, 18, 20, 22 zugeordnet wird, in elektrische Energie gewandelt und mindestens einer weiteren Komponente des Fahrzeugs 2 und/oder des Systems 30, d. h. dem mindestens einen elektrischen Energiespeicher 24 und/oder einer anderen Elektromaschine 16, 18, 20, 22, bereitgestellt wird.

Bei der Ausführungsform des Verfahrens wird mindestens eine erste Elektromaschine 16, 18, 20, 22 in dem zweiten motorischen Betriebsmodus und mindestens eine zweite Elektromaschine 16, 18, 20, 22 in dem dritten generatorischen Betriebsmodus betrieben, wobei elektrische Energie, die von der mindestens eine zweiten Elektromaschine 16, 18, 20, 22 aus mechanischer Energie gewandelt wird, direkt, unmittelbar, zugleich und/oder synchron von der mindestens einen ersten Elektromaschine 16, 18, 20, 22 in mechanische Energie gewandelt wird.

## Patentansprüche

1. Verfahren zum Betreiben eines Fahrzeugs (2), das mehrere Räder (8, 10,12, 14) und mehrere Elektromaschinen (16, 18, 20, 22) aufweist, wobei jede Elektromaschine (16, 18, 20, 22) mit mindestens einem Rad (8, 10, 12, 14) gekoppelt und in mehreren Betriebsmodi betreibbar ist, wobei die jeweilige Elektromaschine (16, 18, 20, 22) in einem ersten motorischen Betriebsmodus in einer ersten Drehrichtung gedreht wird, wobei elektrische Energie in mechanische Energie gewandelt wird, wobei das mindestens eine Rad (8, 10, 12, 14) in einer Vorwärtsrichtung gedreht wird, wodurch das Fahrzeug mit dem mindestens einen Rad (8, 10, 12, 14) angetrieben wird, wobei die jeweilige Elektromaschine (16, 18, 20, 22) in einem zweiten motorischen Betriebsmodus in einer zweiten Drehrichtung gedreht wird, die der ersten Drehrichtung entgegengesetzt ist, wobei elektrische Energie in mechanische Energie gewandelt wird, wobei das mindestens eine Rad (8, 10, 12, 14) in einer Rückwärtsrichtung gedreht wird, wodurch das Fahrzeug mit dem mindestens einen Rad (8, 10, 12, 14) gebremst wird, wobei für die jeweilige Elektromaschine (16, 18, 20, 22) ein dritter generatorischer Betriebsmodus vorgesehen ist, wobei das mindestens eine Rad (8, 10, 12, 14) in der Vorwärtsrichtung gedreht wird, wobei mechanische Energie, die aus einer Bewegung des mindestens einen Rads (8, 10, 12, 14) resultiert, von der jeweiligen Elektromaschine (16, 18, 20, 22) im dritten generatorischen Betriebsmodus in elektrische Energie gewandelt wird, wodurch das Fahrzeug (2) gebremst wird, wobei mindestens eine erste Elektromaschine (16, 18, 20, 22) in dem zweiten motorischen Betriebsmodus und mindestens eine zweite Elektromaschine (16, 18, 20, 22) in dem dritten generatorischen Betriebsmodus betrieben wird, wobei elektrische Energie, die von der mindestens eine zweiten Elektromaschine (16, 18, 20, 22) aus mechanischer Energie gewandelt wird, direkt von der mindestens einen ersten Elektromaschine (16, 18, 20, 22) in mechanische Energie gewandelt wird.

2. Verfahren nach Anspruch 1, bei dem vorgesehen ist, dass das Fahrzeug (2) mindestens einen elektrischen Energiespeicher (24) aufweist, in dem elektrische Energie speicherbar ist, die von mindestens einer Elektromaschine (16, 18, 20, 22) im dritten generatorischen Betriebsmodus aus mechanischer Energie gewandelt wird, und aus dem elektrische Energie entnehmbar ist, die von der mindestens einen Elektromaschine (16, 18, 20, 22) in einem motorischen Betriebsmodus in mechanische Energie gewandelt wird.

3. Verfahren nach Anspruch 2, bei dem die mindestens eine erste Elektromaschine (16, 18, 20, 22) in dem zweiten motorischen Betriebsmodus und die mindestens eine zweite Elektromaschine (16, 18, 20, 22) in dem dritten generatorischen Betriebsmodus betrieben wird, falls in dem mindestens einen Energiespeicher (24) eine Menge an elektrischer Energie gespeichert ist, die größer als ein definierbarer Schwellwert ist.

4. Verfahren nach einem der voranstehenden Ansprüche, bei dem die mindestens eine erste Elektromaschine (16, 18, 20, 22) in dem zweiten motorischen Betriebsmodus und die mindestens eine zweite Elektromaschine (16, 18, 20, 22) in dem dritten generatorischen Betriebsmodus betrieben wird, wenn das Fahrzeug (2) zu bremsen ist.

5. Verfahren nach einem der voranstehenden Ansprüche, bei dem die mindestens eine erste Elektromaschine (16, 18, 20, 22) in dem zweiten motorischen Betriebsmodus und die mindestens eine zweite Elektromaschine (16, 18, 20, 22) in dem dritten generatorischen Betriebsmodus betrieben wird, wenn das Fahrzeug (2) bergab fährt.

6. Verfahren nach einem der voranstehenden Ansprüche, bei dem für den Fall, dass die mindestens eine erste Elektromaschine (16, 18, 20, 22) in dem zweiten motorischen Betriebsmodus und die mindestens eine zweite Elektromaschine (16, 18, 20, 22) in dem dritten generatorischen Betriebsmodus betrieben wird, ein Drehmoment des Fahrzeugs (2) ausgeglichen wird.

7. Verfahren nach einem der Ansprüche 2 bis 6, bei dem für den Fall, dass die mindestens eine erste Elektromaschine (16, 18, 20, 22) in dem zweiten motorischen Betriebsmodus und die mindestens eine zweite Elektromaschine (16, 18, 20, 22) in dem dritten generatorischen Betriebsmodus betrieben wird, wenigstens ein Teil der elektrischen Energie, die von der mindestens einen ersten Elektromaschine (16, 18, 20, 22) im zweiten motorischen Betriebsmodus benötigt wird, aus dem mindestens einen elektrischen Energiespeicher (24) entnommen wird.

8. Verfahren nach einem der Ansprüche 2 bis 7, bei dem für den Fall, dass die mindestens eine erste Elektromaschine (16, 18, 20, 22) in dem zweiten motorischen Betriebsmodus und die mindestens eine zweite Elektromaschine (16, 18, 20, 22) in dem dritten generatorischen Betriebsmodus betrieben wird, wenigstens ein Teil der elektrischen Energie, die von der mindestens einen zweiten Elektromaschine (16, 18, 20, 22) im dritten motorischen Betriebsmodus erzeugt wird, in dem mindestens einen elektrischen Energiespeicher (24) gespeichert wird.

9. System zum Betreiben eines Fahrzeugs (2), das mehrere Räder (8, 10, 12, 14) und mehrere Elektromaschinen (16, 18, 20, 22) aufweist, wobei jede Elektromaschine (16, 18, 20, 22) mit mindestens einem Rad (8, 10, 12, 14) gekoppelt und in mehreren Betriebsmodi betreibbar ist, wobei die jeweilige Elektromaschine (16, 18, 20, 22) in einem ersten motorischen Betriebsmodus in einer ersten Drehrichtung drehbar ist, wobei elektrische Energie in mechanische Energie wandelbar ist, wobei das mindestens eine Rad (8, 10, 12, 14) in einer Vorwärtsrichtung drehbar ist, wodurch das Fahrzeug mit dem mindestens einen Rad (8, 10, 12, 14) antreibbar ist, wobei die jeweilige Elektromaschine (16, 18, 20, 22) in einem zweiten motorischen Betriebsmodus in einer zweiten Drehrichtung drehbar ist, die der ersten Drehrichtung entgegengesetzt ist, wobei elektrische Energie in mechanische Energie wandelbar ist, wobei das mindestens eine Rad (8, 10, 12, 14) in einer Rückwärtsrichtung drehbar ist, wodurch das Fahrzeug (2) mit dem mindestens einen Rad (8, 10, 12, 14) bremsbar ist, wobei für die jeweilige Elektromaschine (16, 18, 20, 22) ein dritter generatorischer Betriebsmodus vorgesehen ist, wobei das mindestens eine Rad (8, 10, 12, 14) in der Vorwärtsrichtung drehbar ist, wobei mechanische Energie, die aus einer Bewegung des mindestens einen Rads (8, 10, 12, 14) resultiert, von der jeweiligen Elektromaschine (16, 18, 20, 22) im dritten generatorischen Betriebsmodus in elektrische Energie wandelbar ist, wodurch das Fahrzeug (2) bremsbar ist, wobei das System (30) mindestens ein Steuergerät (28) aufweist, das dazu ausgebildet ist, zu veranlassen, mindestens eine erste Elektromaschine (16, 18, 20, 22) in dem zweiten motorischen Betriebsmodus und mindestens eine zweite Elektromaschine (16, 18, 20, 22) in dem dritten generatorischen Betriebsmodus zu betreiben, wobei elektrische Energie, die von der mindestens eine zweiten Elektromaschine (16, 18, 20, 22) aus mechanischer Energie wandelbar ist, direkt von der mindestens einen ersten Elektromaschine (16, 18, 20, 22) in mechanische Energie wandelbar ist.
